# EUROPEAN PATENT SPECIFICATION

(11) **EP 3 294 670 B1**
(45) Date of publication and mention of the grant of the patent: **23.10.2019**
(21) Application number: 16729660.7
(22) Date of filing: 16.05.2016
(51) Int. Cl.: C01B 3/56

(54) **INCREMENTAL HYDROGEN PRODUCTION FROM AN EXISTING STEAM/NATURAL GAS REFORMER**
INKREMENTELLE WASSERSTOFFPRODUKTION AUS EINEM BESTEHENDEN DAMPF-/ERDGASREFORMER
PRODUCTION INCRÉMENTIELLE D'HYDROGÈNE À PARTIR D'UN REFORMEUR EXISTANT À VAPEUR/GAZ NATUREL

(30) Priority: 15.05.2015 US 201562162229 P
(43) Date of publication of application: 21.03.2018
(73) Proprietor: NiQuan Energy LLC, Washington, DC 20006 (US)
(72) Inventor: ALLAM, Rodney J., Chippenham Wiltshire SN14 6LY (GB)
(74) Representative: Mammel, Ulrike
(86) International application number: PCT/US2016/032716
(87) International publication number: WO 2016/187125

(56) References cited:
- WO-A1-00/27505
- WO-A1-2011/067326
- WO-A2-2010/022162
- US-A1- 2012 141 368

## Description

### TECHNICAL FIELD

This invention relates to gas-to-liquids production, and more particularly to incremental hydrogen production from an existing steam/natural gas reformer.

### BACKGROUND

An integrated plant for the conversion of a hydrocarbon gas such as natural gas to useful hydrocarbon liquid fuels and feed-stocks comprises an H2+CO syn-gas generation system which provides feed gas to a Fischer-Tropsch catalytic hydrocarbon synthesis system with an associated power and heat energy system

High efficiency, low capital cost, together with a low carbon footprint, are the major objectives of a total facility. US Patents 6534551 and 6669744 describe an integrated synthesis gas generation system comprising a two-stage synthesis gas generation unit integrated with a gas turbine which provides at least part of the energy required to drive an 02 production plant. The 02 plant can be either a cryogenic air separation unit, a high temperature mixed oxide 02 ion transfer membrane reactor integrated with the gas turbine, or other unit. The two stage synthesis gas generator comprises a Partial Oxidation (POX) or an Auto-thermal Reformer (ATR) coupled in either case in a parallel or series configuration with a gas heated catalytic steam/hydrocarbon reformer (GHR) in which the heating gas is the mixed product
from each synthesis gas generation reactor. The hot exhaust gas from the gas turbine provides at least part of the heat used to preheat the feed streams to the synthesis gas generation reactors.

WO 00/27505 describes a gas separation apparatus and process has a first pressure swing adsorption (PSA) unit receiving feed gas, which comprises a first and a second component. First PSA unit produces first product gas predominantly containing the first component, and first off gas containing at least some of the first component and second component. Compressor is coupled to first PSA unit to compress first off gas to form compressed off gas, which is passed downstream to absorber unit, which employs a solvent to remove at least part of the second component from compressed off gas, forming an enriched compressed off gas. Second PSA unit receives enriched compressed off gas and produces second product gas which predominantly contains the first component and a second off gas that is sent to waste or reformer burner.

US 2012/0141368 A1 describes a novel steam reformer unit design, a novel hydrogen PSA unit design, a novel hydrogen/nitrogen enrichment unit design, and novel processing scheme application are pre-sented.

WO 2016/187125 A1 describes a method for incremental hydrogen production includes separating in a first Pressure Swing Absorp -tion (PSA) system an existing reformer synthesis gas product stream into a first hydrogen stream and a first waste stream. The first waste stream is compressed to at least 40 bar to produce a compressed waste stream. Water is removed from the compressed waste stream to produce a dried waste stream. Carbon dioxide is removed from the dried waste stream to produce a remaining waste stream, and the removed carbon dioxide is at least 85% of carbon dioxide in the existing reformer synthesis gas product stream. A second PSA system separates the remaining waste stream into a second hydrogen stream and a second waste stream, and the second hydrogen stream comprises at least 11 % of hydrogen from the existing reformer synthesis gas product stream. The second waste stream is passed to a reformer furnace as fuel gas.

WO 2010/022162 A2 describes in various implementations, feed streams that include methane are reacted to produce synthesis gas. The synthesis gas may be further processed to produce ultrapure, high-pressure hydrogen streams.

Like reference symbols in the various drawings indicate like elements.

### DETAILED DESCRIPTION

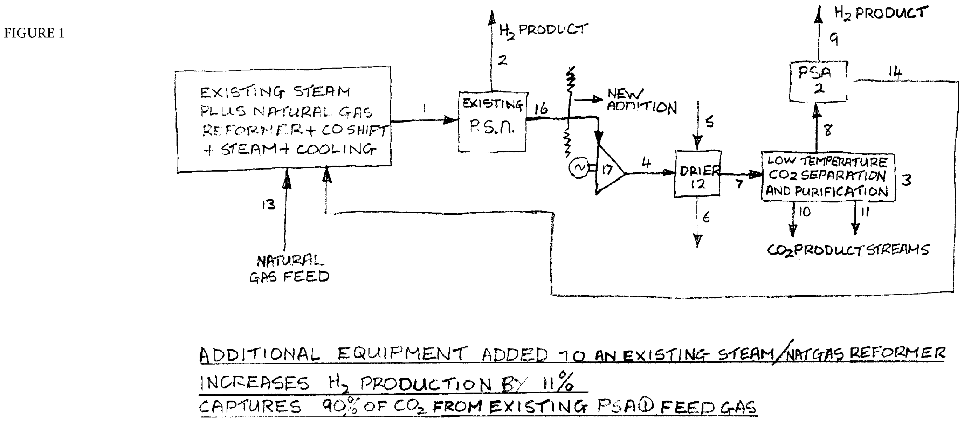

FIGURE 1 illustrates an example system for incremental hydrogen production. For example, the process for incremental hydrogen production from an existing
catalytic steam/natural gas reformer may use a low-temperature CO2 condensation process to separate the CO2 present in the waste gas from an existing reformer pressure swing adsorption (PSA) hydrogen separation unit so that the remaining hydrogen enriched waste gas may then be sent to a second PSA unit where more H2 can be separated. The waste gas stream 16 may initially be compressed from, for example,
about 1.2 bar to 40 bar in the compressor 17 and then the compressed waste gas stream 4 is dried in, for example, an adsorbent bed drier 12, which is regenerated by a nitrogen gas stream 5 and 6. As illustrated, the compressed waste gas steam 7 enters the CO2 condensation system 3 where it is cooled to, for example, within 2° C of its triple point temperature. The liquid CO2 is separated and evaporated to produce
refrigeration for the process and the CO2 product leaves as two separate streams 10 and 11 at an average pressure of about lObar. The remaining compressed waste gas, stream 8, containing about 65% H2, is separated in the PSA 2 producing a substantially pure H2 stream 9 at 35bar pressure and a waste gas stream 14 which is used as part of the fuel gas in the existing reformer furnace. In some implementations, the system
described can produce an incremental 11% more H2 from the existing reformer synthesis gas product stream 1. The incremental H2 production may use additional natural gas to replace the H2 which would have been burned in the reformer furnace. The fuel consumption for the incremental H2 production is, in some implementations, 280Btu/scf H2. In these instances, the produced CO2 in streams 10 plus 11 can be about 85% of the CO2 present in the reformer product stream 1.

## Claims

1. (Original) A method for incremental hydrogen production, comprising:
separating in a first Pressure Swing Adsorption (PSA) system an existing reformer synthesis gas product stream into a first hydrogen stream and a first waste stream;
compressing the first waste stream to at least 40 bar to produce a compressed waste stream;
removing water from the compressed waste stream to produce a dried waste stream;
removing carbon dioxide from the dried waste stream to produce a remaining waste stream, wherein the removed carbon dioxide is at least 85% of carbon dioxide in the existing reformer synthesis gas product stream;
separating in a second PSA system the remaining waste stream into a second hydrogen stream and a second waste stream, wherein the second hydrogen stream comprises at least 11% of hydrogen from the existing reformer synthesis gas product stream; and
passing the second waste stream to a reformer furnace as fuel gas.

2. (Original) A system for incremental hydrogen production, comprising:
a first Pressure Swing Adsorption (PSA) system configured to separate an existing reformer synthesis gas product stream into a first hydrogen stream and a first waste stream;
a compressor configured to compress the first waste stream to at least 40 bar to produce a compressed waste stream;
a drier configured to remove water from the compressed waste stream to produce a dried waste stream;
a low-temperature separator configured to remove carbon dioxide from the dried waste stream to produce a remaining waste stream, wherein the removed carbon dioxide is at least 85% of carbon dioxide in the existing reformer synthesis gas product stream;
a second PSA system configured to separate the remaining waste stream into a second hydrogen stream and a second waste stream, wherein the second hydrogen stream comprises at least 11% of hydrogen from the existing reformer synthesis gas product stream; and
a conduit configured to pass the second waste stream to a reformer furnace as fuel gas.

## Patentansprüche

1. Verfahren zur inkrementellen Wasserstoffproduktion, umfassend:
Trennen, in einem ersten Druckwechseladsorptions (PSA)-System, einer bestehenden Reformer-Synthesegasproduktströmung in einen ersten Wasserstoffstrom und einen ersten Abstrom;
Verdichten des ersten Abstroms auf mindestens 40 bar, um einen verdichteten Abstrom zu erzeugen;
Abscheiden von Wasser aus dem verdichteten Abstrom, um einen getrockneten Abstrom zu erzeugen;
Abscheiden von Kohlenstoffdioxid aus dem getrockneten Abstrom, um einen Rest-Abstrom zu erzeugen, wobei das abgeschiedene Kohlenstoffdioxid mindestens 85 % des Kohlenstoffdioxids in der bestehenden Reformer-Synthesegasproduktströmung ist;
Trennen, in einem zweiten PSA-System, des Rest-Abstroms in einen zweiten Wasserstoffstrom und einen zweiten Abstrom, wobei der zweite Wasserstoffstrom mindestens 11 % Wasserstoff aus der bestehenden Reformer-Synthesegasproduktströmung umfasst; und
Leiten des zweiten Abstroms als Brenngas an einen Reformerbrenner.

2. System zur inkrementellen Wasserstoffproduktion, umfassend:
ein erstes Druckwechseladsorptions (PSA)-System, das eingerichtet ist, eine bestehende Reformer-Synthesegasproduktströmung in einen ersten Wasserstoffstrom und einen ersten Abstrom zu trennen;
einen Verdichter, der eingerichtet ist, den ersten Abstrom auf mindestens 40 bar zu verdichten, um einen verdichteten Abstrom zu erzeugen;
einen Trockner, der eingerichtet ist, Wasser aus dem verdichteten Abstrom abzuscheiden, um einen getrockneten Abstrom zu erzeugen;
einen Niedertemperaturabscheider, der eingerichtet ist, Kohlenstoffdioxid aus dem getrockneten Abstrom abzuscheiden, um einen Rest-Abstrom zu erzeugen, wobei das abgeschiedene Kohlenstoffdioxid mindestens 85 % Kohlenstoffdioxid in der bestehenden Reformer-Synthesegasproduktströmung ist;
ein zweites Druckwechseladsorptions (PSA)-System, das eingerichtet ist, den Rest-Abstrom in einen zweiten Wasserstoffstrom und einen zweiten Rest-Abstrom zu trennen, wobei der zweite Wasserstoffstrom mindestens 11 % Wasserstoff aus der bestehenden Reformer-Synthesegasproduktströmung umfasst; und
eine Leitung, die eingerichtet ist, den zweiten Abstrom als Brenngas an einen Reformerbrenner zu leiten.

## Revendications

1. Procédé destiné à la production d'hydrogène incrémentale, comprenant :
séparer, dans un premier système d'adsorption à pression modulée (PSA), un flux de produit de gaz de synthèse de reformeur existant en un premier flux d'hydrogène et un premier flux de déchets ;
comprimer le premier flux de déchets jusqu'à au moins 40 bar afin de produire un flux de déchets comprimé ;
éliminer l'eau du flux de déchets comprimé afin de produire un flux de déchets séché ;
éliminer le dioxyde de carbone du flux de déchets séché afin de produire un flux de déchets restant, dans lequel le dioxyde de carbone éliminé est au moins 85 % de dioxyde de carbone dans le flux de produit de gaz de synthèse de reformeur existant ;
séparer, dans un second système PSA, le flux de déchets restant en un second flux d'hydrogène et un second flux de déchets, dans lequel le second flux d'hydrogène comprend au moins 11 % d'hydrogène provenant du flux de produit de gaz de synthèse de reformeur existant, et
transférer le second flux de déchets à un four de reformeur sous la forme de gaz combustible.

2. Système destiné à la production d'hydrogène incrémentale, comprenant :
un premier système d'adsorption à pression modulée (PSA) configuré pour séparer un flux de produit de gaz de synthèse de reformeur existant en un premier flux d'hydrogène et un premier flux de déchets ;
un compresseur configuré pour comprimer le premier flux de déchets jusqu'à au moins 40 bar afin de produire un flux de déchets comprimé ;
un séchoir configuré pour éliminer l'eau du flux de déchets comprimé afin de produire un flux de déchets séché ;
un séparateur à basses températures configuré pour éliminer le dioxyde de carbone du flux de déchets séché afin de produire un flux de déchets restant, dans lequel le dioxyde de carbone éliminé est au moins 85 % de dioxyde de carbone dans le flux de produit de gaz de synthèse de reformeur existant ;
un second système PSA configuré pour séparer le flux de déchets restant en un second flux d'hydrogène et un second flux de déchets, dans lequel le second flux d'hydrogène comprend au moins 11 % d'hydrogène provenant du flux de produit de gaz de synthèse de reformeur existant, et
un conduit configuré pour transférer le second flux de déchets à un four de reformeur sous la forme de gaz combustible.
